**Europäisches Patentamt**

**European Patent Office**

**Office européen des brevets**

(19)

(11) Numéro de publication: **0 114 779**
**B1**

(12) # FASCICULE DE BREVET EUROPEEN

(45) Date de publication du fascicule du brevet:
**17.09.86**

(51) Int. Cl.⁴: **F 16 H 7/12**

(21) Numéro de dépôt: **84400145.3**

(22) Date de dépôt: **24.01.84**

(54) Tendeur de courroie ou de chaîne de transmission.

(30) Priorité: **25.01.83 FR 8301205**

(43) Date de publication de la demande:
**01.08.84 Bulletin 84/31**

(45) Mention de la délivrance du brevet:
**17.09.86 Bulletin 86/38**

(84) Etats contractants désignés:
**AT BE DE FR GB IT LU NL SE**

(56) Documents cités:
**DE - C - 531 440**
**US - A - 1 660 520**
**US - A - 2 119 397**
**US - A - 4 144 772**
**US - E - 30 842**

(73) Titulaire: **Caoutchouc Manufacturé et Plastiques Société**
**Anonyme dite:, 49 rue Jean-Jaurès, F-95871 Bezons (FR)**

(72) Inventeur: **Diard, Jean-Claude, 18, rue Fontenettes,**
**F-95550 Bessancourt (FR)**

ACTORUM AG

**Description**

L'invention est relative aux transmissions à poulies et courroies ou aux transmissions à poignons et chaînes et elle concerne un dispositif tendeur destiné à maintenir la tension correcte de la courroie ou de la chaîne pour assurer un bon fonctionnement de la transmission.

Les dispositifs tendeurs connus comprennent généralement un galet fou appuyant sur la courroie ou sur la chaîne et porté à l'extrémité d'un bras tendeur oscillant soumis à l'action d'un ressort donnant la tension désirée. Le ressort peut être un ressort métallique hélicoïdal ou un ressort en spirale (DE-C-531440) mais il est connu aussi d'utiliser un ressort en caoutchouc comprenant un manchon élastique adhérant aux surfaces co-axiales de deux armatures dont l'une est fixe et l'autre est mobile et solidaire du bras tendeur. (US-A-4144772, US-E-30842). Dans certains cas la position angulaire du bras tendeur peut être réglée lors du montage par rapport à l'armature mobile du ressort de façon à pouvoir régler la tension initiale de torsion du manchon en caoutchouc. Cependant toute modification ultérieure de ce réglage, par exemple pour compenser un allongement important de la courroie, nécessite un démontage et un re-positionnement du bras (US-E-30842).

Un des objectifs de l'invention est de permettre un réglage facile et rapide de la tension du ressort sans avoir à procéder à aucun démontage. A cette fin l'invention concerne un dispositif tendeur de courroie ou de chaîne de transmission comprenant un bras tendeur oscillant soumis à l'action d'un ressort, comprenant un manchon en caoutchouc travaillant en torsion entre deux armatures, co-axiales à l'axe d'oscillation du bras tendeur et dont l'une est réglable angulairement pour modifier la torsion du manchon en caoutchouc, caractérisé en ce que l'armature réglable angulairement est en outre mobile axialement et maintenue dans sa position de réglage angulaire par une tension élastique axiale du manchon en caoutchouc.

De préférence l'armature réglable présente une denture à encliquetage suivant un sens de rotation coopérant avec une denture d'arrêt correspondante contre laquelle elle est maintenue engagée par la tension élastique axiale du manchon en caoutchouc du ressort.

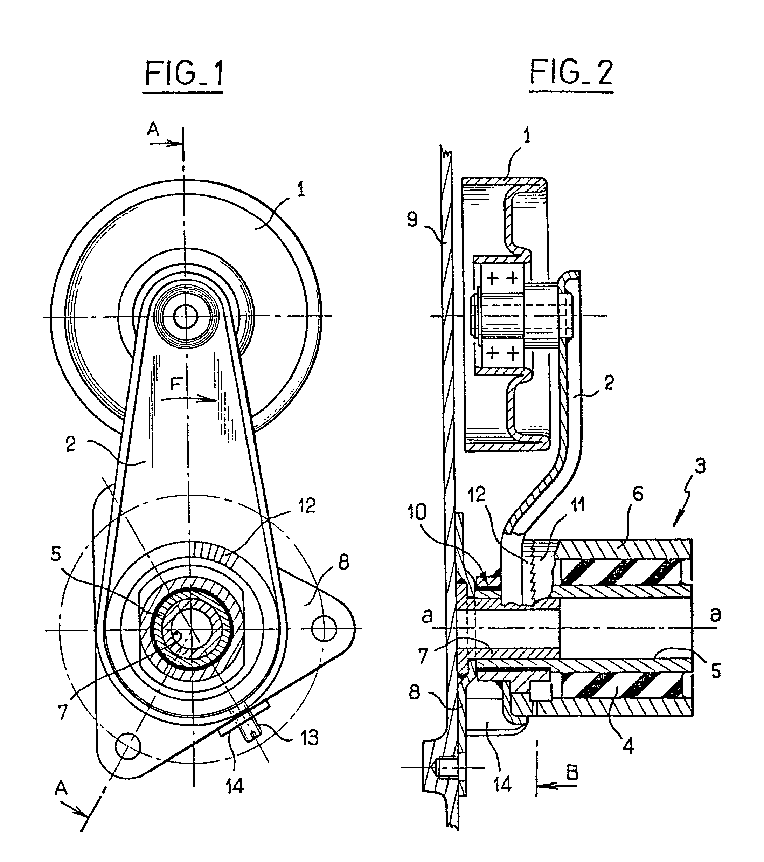

Avec cet arrangement il suffit, une fois le bras tendeur mis en contact avec la courroie, de tourner l'armature réglable du ressort pour donner au manchon en caoutchouc la torsion initiale désirée ou pour réajuster cette torsion après un certain temps de fonctionnement de la transmission. Un exemple de réalisation de ce dispositif tendeur est décrit ci-après en référence au dessin ci-joint dans lequel la figure 1 est une vue en élévation coupe et la figure 2 une vue de côté en coupe.

Le dispositif comprend un galet de tension 1 tournant librement à l'extrémité d'un bras tendeur 2 monté oscillant autour d'un axe a-a et soumis à l'action d'un ressort de torsion 3 co-axial à cet axe. Ce ressort est constitué d'un manchon en caoutchouc 4 fixé à une armature intérieure tubulaire fixe 5 et à une douille ou armature extérieure réglable 6, de façon à travailler normalement en cisaillement de torsion entre ces deux armatures en sollicitant le bras 2 dans le sens de la flèche F. L'armature intérieure 5 est emmanchée sur un manchon 7 solidaire d'une plaque support 8 fixée au bâti 9 qui supporte l'ensemble de la transmission et du dispositif tendeur. Ce bati peut être par exemple le bloc moteur d'un véhicule. Le bras 2 est monté oscillant sur une portée de tourillonnement 10 ménagée sur un prolongement de l'armature intérieure fixe 5 et comprise entre la plaquette support 8 et le ressort 3, ce qui réduit le porte à faux de ce bras 2 par rapport à la fixation sur la plaquette support.

Pour le réglage de la torsion du ressort 3, et donc de l'effort de tension exercé par le galet 1 sur la courroie ou la chaîne de transmission, la douille extérieure 6 du ressort est mobile axialement et elle présente en bout une denture 11 à encliquetage suivant un sens de rotation, en prise axiale avec une denture d'arrêt correspondante 12 fixée solidairement en rotation sur un côté du bras tendeur 2. Ces deux dentures sont maintenues normalement en prise grâce à une tension élastique axiale du manchon en caoutchouc 4 qui tend à pousser la douille 6 vers le bras 2.

Cette élasticité du manchon 4 travaillant en cisaillement axial permet cependant à la douille extérieure de s'éloigner du bras 2 pour dégager sa denture 11 de la denture d'arrêt 12 du bras 2. La forme de ces dentures est telle que en tournant la douille 6 dans le sens inverse à celui de la flèche F par rapport au bras 2 maintenu fixe, on peut dégager les dentures l'une de l'autre et modifier la position angulaire de cette douille pour augmenter la torsion du manchon en caoutchouc 4, ensuite de quoi l'élasticité axiale du manchon assure le rappel axial de la douille 6 en mettant à nouveau les dentures en prise dans la position de réglage angulaire choisie. Pour faciliter le mouvement angulaire de la douille 6 on prévoit sur cette douille des moyens de prise tels que des crans ou des méplats permettant de l'actionner avec une clef convenable.

Avec cet arrangement, on voit que l'on peut installer l'ensemble du dispositif tendeur en plaçant le galet de pression 1 en contact avec la courroie. On tend ensuite le ressort de torsion en caoutchouc 3 en tournant la douille extérieure 6 jusqu'à obtenir sur la courroie l'effort de tension désiré.

En cas d'allongement ultérieur de la courroie nécessitant un réajustement de cette tension, il suffit de tourner davantage la douille 6 jusqu'à une nouvelle position de tension sans avoir à procéder à aucun démontage du dispositif.

Pour faciliter le montage du dispositif tendeur sur le bloc moteur supportant la transmission, il peut y avoir avantage à donner au ressort de torsion 3 une tension de valeur pré-réglée avant de procéder à ce montage. L'invention prévoit à cette fin un dispositif de blocage permettant d'immobiliser le bras tendeur 2 par rapport à l'armature fixe 5 du ressort en caoutchouc, de façon à permettre de donner une torsion déterminée au manchon en caoutchouc 4 avant d'installer le dispositif. Dans l'exemple illustré, ce blocage du bras tendeur est obtenu au moyen d'une vis d'arrêt 13 vissée dans une patte 14 solidaire du support 8 et engagée dans un trou radial du bras tendeur 2. Ce support 8 étant solidaire de l'armature intérieure fixe 5 du ressort, cette vis immobilise le bras et l'on peut alors tourner la douille extérieure 6 jusqu'à la position de pré-réglage désirée. Après installation du dispositif tendeur dans la transmission, on dégage la vis 13 pour libérer le bras et appliquer le galet de pression 1 sur la courroie de la transmission.

### Revendications

1. Dispositif tendeur de courroie ou de chaîne de transmission comprenant un bras tendeur oscillant (2), soumis à l'action d'un ressort (3), comprenant un manchon en caoutchouc (4), travaillant en torsion entre deux armatures (5-6), co-axiales à l'axe d'oscillation du bras tendeur et dont l'une est réglable angulairement pour modifier la torsion du manchon en caoutchouc, caractérisé en ce que l'armature réglable angulaire (6) est en outre mobile axialement et maintenue dans sa position de réglage angulaire par une tension élastique axiale du manchon en caoutchouc (4).

2. Dispositif tendeur selon la revendication 1, caractérisé en ce que l'armature réglable (6) du ressort (3) en caoutchouc présente une denture (11) à encliquetage suivant un sens de rotation qui est maintenue axialement en prise avec une denture d'arrêt correspondante (12) par la tension élastique axiale du manchon en caoutchouc.

3. Dispositif tendeur selon la revendication 2, caractérisé en ce que la denture d'arrêt (12) est solidaire en rotation du bras tendeur oscillant (2).

4. Dispositif tendeur selon l'une des revendication 1 à 3 dans lequel le ressort (3) en caoutchouc comprend deux armatures cylindriques co-axiales, caractérisé en ce que l'armature réglable est constituée par une douille extérieure tubulaire (6) du ressort.

5. Dispositif tendeur selon l'une des revendications de 1 à 4, caractérisé en ce que le bras tendeur (2) est monté oscillant sur une portée (10) ménagée sur un prolongement de l'armature intérieure fixe (5) du ressort en caoutchouc.

6. Dispositif tendeur selon la revendication 5, caractérisé en ce que la portée d'oscillation (10) du bras tendeur (2) est comprise entre le support (8) du dispositif et le ressort (3) en caoutchouc, sollicitant le bras tendeur.

7. Dispositif tendeur selon l'une des revendications de 1 à 6 caractérisé en ce qu'il comprend un dispositif de blocage temporaire (13-14) du bras tendeur par rapport à l'armature fixe (5), du ressort en caoutchouc, permettant le pré-réglage de la torsion du ressort avant le montage de l'ensemble sur la transmission.

### Patentansprüche

1. Einrichtung zum Spannen eines Riemens oder einer Kette eines Getriebes, bestehend aus einem schwenkbaren Spannarm (2), der mit der Kraft einer Feder (3) belastet ist, mit einer Hülse aus Gummi (4), die zwischen zwei zur Drehachse des Spannarms koaxialen Verstärkungen (5, 6) auf Torsion belastbar ist, wobei eine der Hülsen drehverstellbar ist, um die Torsion der Gummihülse zu verändern, dadurch gekennzeichnet, dass die drehverstellbare Verstärkung (6) ferner axial beweglich ist und durch eine elastische Axialspannung der Gummihülse (4) in ihrer eingestellten Winkellage gehalten wird.

2. Einrichtung nach Anspruch 1, dadurch gekennzeichnet, dass die einstellbare Verstärkung (6) der Gummifeder (3) eine Drehrichtungsgesperre-Verzahnung (11) aufweist, die unter der elastischen Axialspannung der Gummihülse mit einer entsprechenden Verzahnung (12) axial in Eingriff gehalten ist.

3. Einrichtung nach Anspruch 2, dadurch gekennzeichnet, dass die Drehrichtungsgesperre-Verzahnung (12) mit dem schwenkbaren Spannarm (2) drehfest verbunden ist.

4. Einrichtung nach einem der Ansprüche 1 bis 3, wobei die Gummifeder (3) aus zwei koaxialen zylindrischen Verstärkungen besteht, dadurch gekennzeichnet, dass die einstellbare Verstärkung von einer äusseren rohrförmigen Buchse (6) der Feder gebildet ist.

5. Einrichtung nach einem der Ansprüche 1 bis 4, dadurch gekennzeichnet, dass der Spannarm (2) auf einem Lager (10) schwenkbar gelagert ist, das auf einer Verlängerung der inneren ortsfesten Verstärkung (5) der Gummifeder angeordnet ist.

6. Einrichtung nach Anspruch 5, dadurch gekennzeichnet, dass das Drehlager (10) des Schwenkarms (2) zwischen dem Träger (8) der Einrichtung und der den Spannarm belastenden Gummifeder (3) angeordnet ist.

7. Einrichtung nach einem der Ansprüche 1 bis 6, gekennzeichnet durch eine Vorrichtung (13-14) zum vorübergehenden Blockieren des Schwenkarms gegenüber der ortsfesten Verstärkung (5) der Gummifeder, die eine Voreinstellung der Federspannung vor der Montage der Einrichtung in dem Getriebe ermöglicht.

### Claims

1. Tightener device for a transmission belt or chain, comprising an oscillating tensioner arm (2) submitted to the action of a spring (3), comprising a rubber sleeve (4) operating under torsion between two supports (5-6), co-axial with respect to the axis of oscillation of the tensioner arm and of which one is angularly adjustable so as to alter the torsion of the rubber sleeve, characterized in that the angularly adjustable support (6) is also axially displaceable and is held in its angularly adjusted position by means of a resilient axial tension of the rubber sleeve (4).

2. Tightener device according to claim 1, characterised in that the adjustable support (6) of the rubber spring (3) has a toothing (11) ratcheting in one direction of rotation which is maintaned in axial engagement with a corresponding stop toothing (12) by the resilient axial tension of the rubber sleeve.

3. Tightener device according to claim 2, characterised in that the stop toothing (12) is fixed in rotation with the oscillating tensioner arm (2).

4. Tightener device according to one of claims 1 to 3, in which the rubber spring (3) comprises two co-axial cylindrical supports, characterised in that the adjustable support is formed by an external tubular sleeve (6) of the spring.

5. Tightener device according to one of claims 1 to 4, characterised in that the tensioner arm (2) is mounted for oscillation on a bearing surface (10) situated on an extension of the fixed inner support (5) of the rubber spring.

6. Tightener device according to claim 5, characterised in that the oscillation bearing surface (10) of the tensioner arm (2) is comprised between the support (8) of the device and the rubber spring (3) biassing the tensioner arm.

7. Tightener device according to one of claims 1 to 6, characterised in that it comprises a device (13-14) for temporary locking of the tensioner arm with respect to the fixed support (5) of the rubber spring, permitting the presetting of the torsion of the spring prior to mounting the assembly on the transmission.

# FIG_1

# FIG_2